# EUROPÄISCHE PATENTSCHRIFT

(11) **EP 2 971 828 B1**
(45) Veröffentlichungstag und Bekanntmachung des Hinweises auf die Patenterteilung: **30.01.2019**
(21) Anmeldenummer: 14714580.9
(22) Anmeldetag: 05.03.2014
(51) Int. Cl.: F16D 13/54, F16D 13/58, F16D 13/56

(54) **KUPPLUNGSEINRICHTUNG**
CLUTCH SYSTEM
DISPOSITIF D'EMBRAYAGE

(30) Priorität: 15.03.2013 DE 102013204598; 15.03.2013 DE 102013204599; 29.04.2013 DE 102013207837; 15.07.2013 DE 102013213745; 30.07.2013 DE 102013214841; 15.08.2013 DE 102013216247
(43) Veröffentlichungstag der Anmeldung: 20.01.2016
(73) Patentinhaber: Schaeffler Technologies AG & Co. KG, 91074 Herzogenaurach (DE)
(72) Erfinder: CHAMBRION, Martin, F-Geispolsheim Geispolsheim (FR); RUF, Johannes, 77815 Bühl (DE)
(86) Internationale Anmeldenummer: PCT/DE2014/200110
(87) Internationale Veröffentlichungsnummer: WO 2014/139526

(56) Entgegenhaltungen:
- EP-A2- 2 105 623
- DE-A1-102010 032 514
- DE-A1-102010 041 472

## Beschreibung

Die Erfindung betrifft eine Kupplungseinrichtung mit den Merkmalen gemäß dem Oberbegriff des Patentanspruchs 1.

Die Kunden erwarten von Kupplungseinrichtungen immer mehr Komfort und Sicherheit. Unter anderem ist speziell bei Kupplungseinrichtungen für Krafträder eine Reduktion der Betätigungsenergie der Kupplungseinrichtung eine der wichtigsten Anforderungen, da die Kupplungseinrichtung üblicherweise mittels der Hand betätigt wird. Viele Systeme erlauben durch die Verwendung einer Antriebsstrangenergie eine Reduktion einer Ausrückkraft der Kupplungseinrichtung. Beispielsweise kann eine Kupplungseinrichtung als sogenannte Booster Kupplung ausgebildet sein. Eine derartige Booster Kupplung besteht aus einer Vorsteuerkupplung und einer Hauptkupplung, die zusammen über eine Kugelrampe verbunden sind. Eine Betätigung der Hauptkupplung ist von einem Zustand des Antriebsstrangs abhängig.

Eine Kupplungseinrichtung, die auf den Oberbegriff des Patentanspruchs 1 lesbar ist, ist aus der DE 10 2010 032 514 A1 bekannt.

Es ist Aufgabe der Erfindung, eine Anpresskraft zum Schließen der Kupplungseinrichtung zu verringern. Weiterhin besteht die Aufgabe der Erfindung darin, die Kupplungseinrichtung möglichst einfach und kostengünstig herzustellen und aufzubauen.

Die Aufgabe der Erfindung wird mittels der Merkmale des Patentanspruchs 1 gelöst. Vorteilhafte Ausführungsformen sind in den abhängigen Ansprüchen angegeben.

Erfindungsgemäß wurde erkannt, dass eine verbesserte Kupplungseinrichtung dadurch bereitgestellt werden kann, dass die Kupplungseinrichtung eine Eingangsseite und eine Ausgangsseite, die drehbar um eine Drehachse angeordnet sind, umfasst. Ferner umfasst die Kupplungseinrichtung wenigstens einen ersten Reibpartner und wenigstens einen zweiten Reibpartner. Der erste Reibpartner ist drehmomentschlüssig mit der Eingangsseite verbunden. Der zweite Reibpartner ist drehmomentschlüssig mit der Ausgangsseite verbunden. Der erste Reibpartner und der zweite Reibpartner sind durch eine Anpresskraft in Reibeingriff bringbar, um ein Drehmoment zwischen der Eingangsseite und der Ausgangsseite zu übertragen. Ferner ist ein Federmittel vorgesehen, wobei das Federmittel ausgebildet ist, die Anpresskraft zu verstärken.

Auf diese Weise wird gewährleistet, dass die Anpresskraft zum Anpressen der beiden Reibpartner erhöht wird und somit bei einem vorgegebenen zu übertragenden Drehmoment die durch den Fahrzeugführer zu bereitstellende Anpresskraft reduziert wird. Auf diese Weise kann die Kupplungseinrichtung anhand einer sehr einfachen Konstruktion eine Reduzierung der Ausrückkraft und eine Begrenzung des Schubmoments bewirken. Insbesondere sind Gewicht und Bauraum wegen der Verwendung von gestanzten Blechteilen stark reduziert. Durch ihre Einfachheit ist die Kupplungseinrichtung vorzugsweise billig, flexibel und zuverlässig. Ferner wirkt sich eine derartige Kupplungseinrichtung günstig auf einen Preis, ein Gewicht, einen Bauraum, eine Auslegung, eine Fertigung, eine Betätigungsenergie und/oder eine Begrenzung des Schubmoments aus.

Die Kupplungseinrichtung kann vorzugsweise in Kraftfahrzeugen, Nutzfahrzeugen, Lastfahrzeugen oder in Krafträdern verwendet werden. Insbesondere ist die Kupplungseinrichtung als Mehrscheibenkupplung ausgebildet. Im Speziellen kann die Kupplungseinrichtung als Doppelkupplung und/oder als Hybridkupplung ausgebildet sein.

Die Kupplungseinrichtung kann nass laufend oder trocken ausgeführt sein. Es kann ein Torsionsschwingungsdämpfer an oder in der Kupplungseinrichtung angebracht sein.

In einer weiteren Ausführungsform ist das Federmittel mit der Ausgangsseite und dem zweiten Reibpartner verbunden, wobei bei einer Drehmomentübertragung zwischen der Eingangsseite und der Ausgangsseite das Federmittel zwischen dem zweiten Reibpartner und der Ausgangsseite verspannt wird, wobei das Federmittel ausgebildet ist, aus der Verspannung die Anpresskraft zum Pressen der beiden Reibpartner aneinander zu verstärken. Diese Ausgestaltung hat den Vorteil, dass die Bereitstellung einer zusätzlichen Anpresskraft abhängig von der Anpresskraft ist. Dadurch kann die Kupplungseinrichtung besonders einfach angesteuert werden. Ferner kann aber ein Nachstellmechanismus bei einem zunehmenden Verschleiß der Reibkupplung für die Verstärkung der Anpresskraft vermieden werden.

Die Ausgestaltung mit Blattfedern hat den besonderen Vorteil, dass die Kupplungseinrichtung besonders in axialer Richtung kompakt ausgestaltet werden kann. Ferner können mittels der Blattfeder besonders hohe zusätzliche Anpressdrücke zum Verstärken der Anpresskraft bereitgestellt werden.

In einer weiteren Ausführungsform weist das Federmittel eine erste Federlage und wenigstens eine zweite Federlage auf, wobei die erste Federlage und die zweite Federlage zumindest teilweise in Berührkontakt stehen. Diese Ausgestaltung hat den Vorteil, dass die Blattfeder eine besonders hohe Federsteifigkeit aufweist. Ferner kann durch die Anzahl der Federlagen auf einfache Weise bei sonst identischer Ausgestaltung der Kupplungseinrichtung die zusätzliche Anpresskraft zum Verstärken der Anpresskraft auf einfache Weise an die Kupplungseinrichtung angepasst werden.

In einer weiteren Ausführungsform ist das Federmittel zumindest teilweise schraubenförmig um die Drehachse geführt. Auf diese Weise wird auch in radialer Richtung ein besonders kompaktes Federmittel bereitgestellt, so dass die Kupplungseinrichtung insgesamt sowohl in axialer als auch in Radialrichtung besonders bauraumgünstig ausgebildet werden kann. Dies ist insbesondere bei Krafträdern mit äußerst eingeschränktem Bauraum von hoher Bedeutung.

In einer weiteren Ausführungsform ist ein Lamellenträger vorgesehen, wobei der Lamellenträger mit dem ersten oder mit dem zweiten Reibpartner drehmomentschlüssig verbunden ist, wobei der Lamellenträger einen Kompressionsabschnitt aufweist, der axial angrenzend an den ersten oder zweiten Reibpartner angeordnet ist. Auf diese Weise kann die zusätzliche Anpresskraft zum Verstärken der Anpresskraft von dem Federmittel über den Lamellenträger auf die Reibpartner geleitet werden, um den Reibschluss zwischen den beiden Reibpartnern zur drehmomentschlüssigen Verbindung der Eingangsseite mit der Ausgangsseite zu erzeugen. Ferner kann durch den Kompressionsabschnitt ebenso die Anpresskraft des zweiten Federmittels auf die Reibpartner geleitet werden. Dadurch kann ein besonders einfacher Kraftfluss innerhalb der Kupplungseinrichtung bereitgestellt werden.

In einer weiteren Ausführungsform umfasst der Kompressionsabschnitt wenigstens eine Modulationsfeder und einen Anschlagabschnitt. Die Modulationsfeder weist ein festes Ende und ein freies Ende auf, wobei das feste Ende mit dem Lamellenträger verbunden ist. Das freie Ende ragt axial über den Anschlagsabschnitt in Richtung dem ersten und/oder dem zweiten Reibpartner heraus. Auf diese Weise kann bei Bereitstellung der Anpresskraft das Reibverhalten bzw. das Einkuppeln sanfter ausgestaltet werden. Je nach Federsteifigkeit der Modulationsfeder kann das Einkuppeln stärker oder sanfter ausgestaltet werden. Ferner sind die Modulationsfedern besonders kostengünstig und einfach mittels eines Stanzbiegeprozesses am Lamellenträger ausbildbar.

In einer weiteren Ausführungsform ist eine Gegenplatte vorgesehen, wobei die Gegenplatte axial gegenüberliegend dem Anschlagsabschnitt des Lamellenträgers angeordnet ist. Zwischen der Gegenplatte und dem Anschlagsabschnitt sind in axialer Richtung der erste und der zweite Reibpartner angeordnet. Die Gegenplatte ist ausgebildet, um die Anpresskraft abzustützen. Auf diese Weise wird der Kraftfluss innerhalb der Kupplungseinrichtung aufrechterhalten. Dies gilt insbesondere, wenn die Gegenplatte mittels Radiallager, insbesondere Radialkugellager, auf der Ausgangsseite abgestützt wird. Auch kann die Gegenplatte in einer alternativen Ausführungsform genutzt werden, um eine Verbindung zwischen der Kupplungseinrichtung und dem Antriebsmotor, insbesondere dem Verbrennungsmotor, bereitzustellen.

In einer weiteren Ausführungsform weist die Kupplungseinrichtung eine Nabe auf. Der Lamellenträger ist drehmomentschlüssig mit der zweiten Reiblamelle und die Nabe ist drehmomentschlüssig mit der Ausgangsseite verbunden. Das Federmittel ist dabei mit dem Lamellenträger und der Nabe zur Drehmomentübertragung zwischen dem Lamellenträger und der Nabe mit dem Lamellenträger und der Nabe verbunden. Die Verbindung kann vorteilhafterweise als Nietverbindung sowohl nabenseitig als auch auf der Seite des Lamellenträgers ausgeführt sein. Diese Ausgestaltung gewährleistet, dass das Federmittel nach dem sogenannten Kniehebelprinzip die Anpresskraft verstärken kann. Dadurch kann eine besonders hohe Verstärkungskraft zum Verstärken der Anpresskraft bereitgestellt werden.

In einer weiteren Ausführungsform ist das Federmittel radial zumindest teilweise zwischen der Nabe und dem Lamellenträger angeordnet. Dadurch kann die Kupplungseinrichtung besonders kompakt ausgebildet werden.

In einer weiteren Ausführungsform ist ein Betätigungselement vorgesehen, das zur Betätigung des zweiten Federmittels ausgebildet und mit dem zweiten Federmittel gekoppelt ist. Das Betätigungselement weist zumindest eine zur Drehachse beabstandete Öffnung auf. Der Lamellenträger weist eine Halteeinrichtung mit einer Haltezunge und einem Sperrelement auf. Die Haltezunge durchgreift eine der Haltezunge zugeordnete Öffnung des Betätigungselements, wobei das Sperrelement das Betätigungselement auf einer zum Lamellenträger abgewandten Seite hintergreift. Auf diese Weise kann eine einfache Fixierung des Betätigungselements an dem Lamellenträger bereitgestellt werden, die auf einfache Weise demontierbar ist. Dies ist insbesondere von Vorteil, da bei Kupplungseinrichtungen für Krafträder in regelmäßigem Abstand die Reibpartner durch den Verschleiß gewechselt werden müssen.

In einer weiteren Ausführungsform ist ein Abstützelement vorgesehen, wobei das Abstützelement drehmomentschlüssig mit der Nabe verbunden ist, wobei das Abstützelement eine Anschlagsfläche umfasst, wobei der Lamellenträger einer der Anschlagsfläche des Abstützelements zugeordnete Anlauffläche aufweist, wobei bei dem Reibschluss zwischen dem ersten Reibpartner und dem zweiten Reibpartner das Federmittel verspannt wird und nach Erreichen einer vordefinierten Verspannung des Federmittels die Anlauffläche an der Anschlagsfläche anschlägt. Dadurch wird vermieden, dass bei einer Drehrichtungsumkehr, beispielsweise bei einem Wechsel vom Zugbetrieb auf Schubbetrieb der Kupplungseinrichtung, die Verstärkungskraft nicht reduziert wird und somit die Reibpartner immer mit der maximal zur Verfügung stehenden Anpresskraft und Verstärkungskraft aneinandergepresst werden. Ferner wird auf diese Weise eine Überbelastung des Federmittels vermieden und somit ein mögliches Knicken des als Blattfeder ausgestalteten Federmittels zuverlässig vermieden. Auch kann im Schubbetrieb durch das Anschlagen der Anschlagsfläche an der Betätigungsfläche zuverlässig eine Drehmomentübertragung über das Abstützelement von der Nabe auf den Lamellenträger bei gleichzeitiger Überbrückung des Federmittels gewährleistet werden.

Nachfolgend wird die Erfindung anhand von Figuren näher erläutert. Dabei werden gleiche Bauteile mit gleichem Bezugszeichen benannt. Dabei zeigen:
Fig. 1 einen perspektivischen Halbschnitt durch eine Kupplungseinrichtung gemäß einer ersten Ausführungsform;
Fig. 2 eine schematische Darstellung eines Federmittels der in Fig. 1 gezeigten Kupplungseinrichtung;
Fig. 3 eine Schnittansicht durch das Federmittel;
Fig. 4 eine Detailansicht einer perspektivischen Schnittansicht durch die in den Fign. 1 bis 3 gezeigte Kupplungseinrichtung;
Fig. 5 einen Ausschnitt einer perspektivischen Schnittansicht durch die in Fig. 1 gezeigte Kupplungseinrichtung;
Fig. 6 eine perspektivische Schnittansicht der Kupplungseinrichtung;
Fig. 7 eine perspektivische Ansicht der in Fig. 1 gezeigten Kupplungseinrichtung mit einem Ausbruch;
Fig. 8 einen Längsschnitt durch die in den Fig. 7 gezeigte Kupplungseinrichtung;
Fig. 9 eine perspektivische Schnittansicht durch eine Kupplungseinrichtung gemäß einer zweiten Ausführungsform;
Fig. 10 eine perspektivische Schnittansicht durch die in Fig. 9 gezeigte Kupplungseinrichtung;
Fig. 11 eine perspektivische Schnittansicht durch eine Kupplungseinrichtung gemäß einer dritten Ausführungsform;
Fig. 12 einen Querschnitt durch die in Fig. 11 gezeigte Kupplungseinrichtung;
Fig. 13 eine schematische Darstellung der in Fig. 12 gezeigten Kupplungseinrichtung;
Fig. 14 eine schematische Darstellung eines Momentenflusses der in den Fign. 12 und 13 gezeigten Kupplungseinrichtung im Schubbetrieb;
Fig. 15 eine schematische Darstellung eines Momentenflusses der in den Fign. 12 und 13 gezeigten Kupplungseinrichtung im Zugbetrieb;
Fig. 16 eine perspektivische Schnittansicht durch eine Kupplungseinrichtung gemäß einer vierten Ausführungsform;
Fig. 17 eine schematische Schnittansicht durch eine Kupplungseinrichtung gemäß einer fünften Ausführungsform;

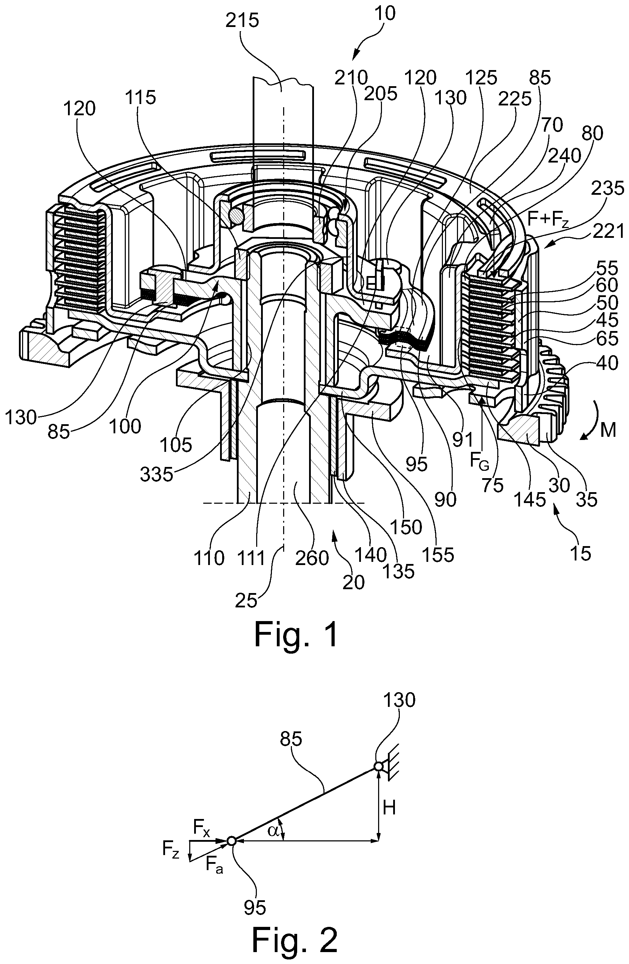

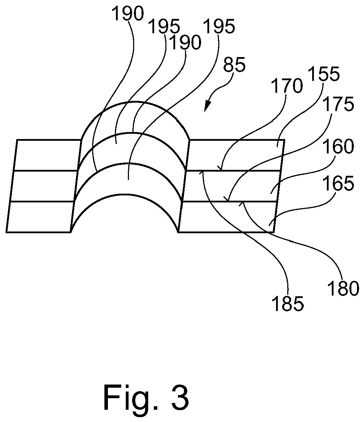

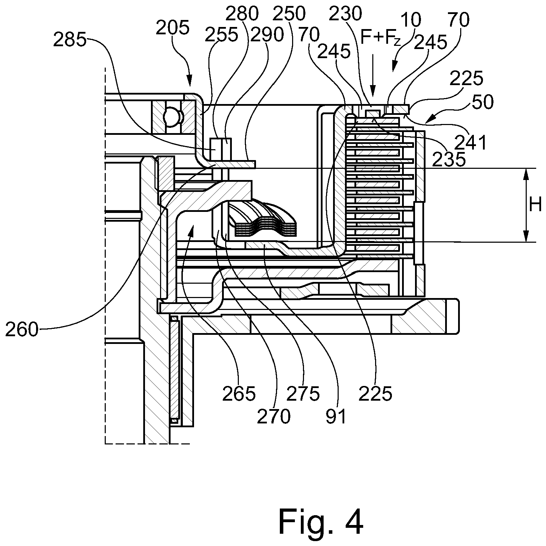

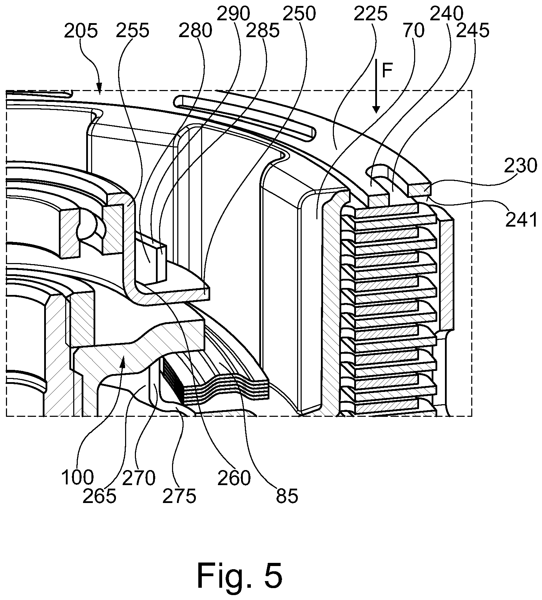

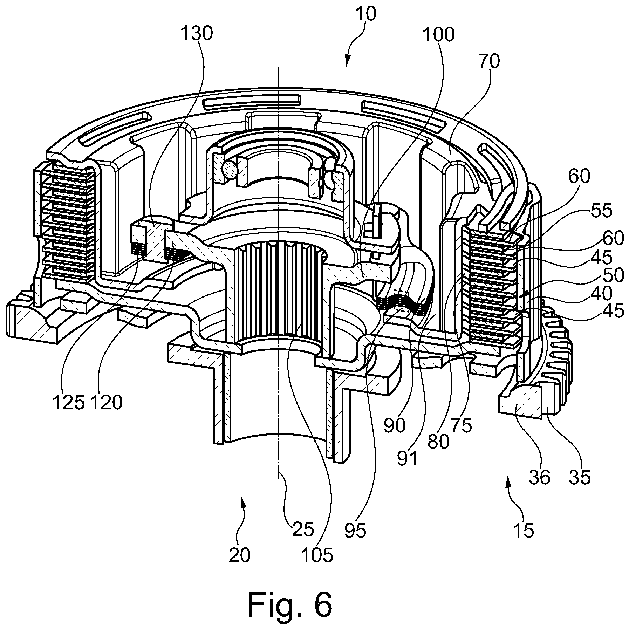

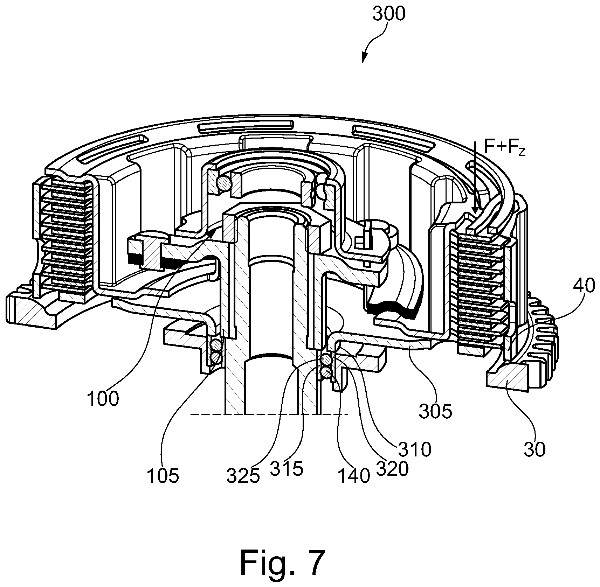

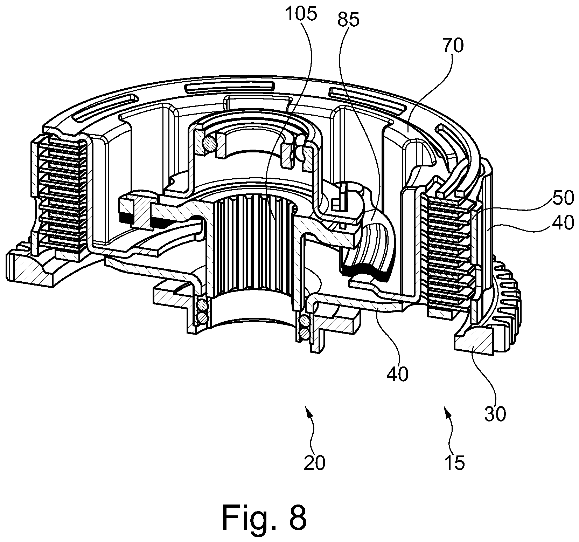

Fig. 1 zeigt einen perspektivischen Halbschnitt durch eine Kupplungseinrichtung 10 gemäß einer ersten Ausführungsform. Fig. 2 zeigt eine schematische Darstellung eines Federmittels 85 der in Fig. 1 gezeigten Kupplungseinrichtung 10. Fig. 3 zeigt eine Schnittansicht durch die in Fig. 1 gezeigte Kupplungseinrichtung 10. Fig. 4 zeigt eine Detailansicht einer perspektivischen Schnittansicht durch die in den Fign. 1 bis 3 gezeigte Kupplungseinrichtung 10. Fig. 5 zeigt eine perspektivische Schnittansicht durch eine Kupplungseinrichtung gemäß einer zweiten Ausführungsform. Fig. 6 zeigt eine perspektivische Schnittansicht der Kupplungseinrichtung 10 und Fign. 7 und 8 zeigen eine perspektivische Ansicht der in Fig. 1 gezeigten Kupplungseinrichtung 10 mit einem Ausbruch. Fig. 8 zeigt einen Längsschnitt durch die in der Fig. 7 gezeigte Kupplungseinrichtung 10. Nachfolgend werden die Fign. 1 bis 8 zum erleichterten Verständnis gemeinsam erläutert.

Die Kupplungseinrichtung 10 umfasst eine Eingangsseite 15 und eine Ausgangsseite 20. Die Eingangsseite 15 und die Ausgangsseite 20 sind drehbar um eine Drehachse 25. Die Eingangsseite 15 weist ein Primärrad 30 mit einer Verzahnung 35 auf. Über das Primärrad 30 wird ein Drehmoment M kommend von einem nicht dargestellten Verbrennungsmotor in die Kupplungseinrichtung 10 eingeleitet. Das Primärrad 30 ist drehmomentschlüssig direkt angrenzend an einen ersten Lamellenträger 40 angeordnet. Der erste Lamellenträger 40 weist eine Innenverzahnung 45 auf. Radial innenliegend zu der Innenverzahnung 45 ist ein Lamellenpaket 50 angeordnet. Das Lamellenpaket 50 umfasst einen als erste Reiblamelle ausgebildeten ersten Reibpartner 55 und einen als zweite Reiblamelle ausgebildeten zweiten Reibpartner 60. Der erste Reibpartner 55 weist eine Außenverzahnung 65 auf, die in die Innenverzahnung 45 des ersten Lamellenträgers 40 eingreift. Dadurch ist der erste Reibpartner 55 drehmomentschlüssig mit dem ersten Lamellenträger 40 verbunden.

Ferner ist ein radial innen liegend zum ersten Lamellenträger 40 ein zweiter Lamellenträger 70 vorgesehen. Der zweite Lamellenträger 70 weist eine im Bereich des Lamellenpakets 50 vorgesehene Außenverzahnung 75 auf. Die zweiten Reibpartner 60 weisen eine Innenverzahnung 80 auf, die in die Außenverzahnung 75 des zweiten Lamellenträgers 70 eingreift. Somit sind die zweiten Reibpartner 60 drehmomentschlüssig mit dem zweiten Lamellenträger 70 verbunden.

Die Kupplungseinrichtung 10 umfasst ferner das Federmittel 85. Das Federmittel 85 ist als Blattfeder ausgebildet. Das Federmittel 85 ist dabei an einem ersten Längsende 90 mit einem radial innen zur Außenverzahnung 75 angeordneten Befestigungsabschnitt 91 des zweiten Lamellenträgers 70 über eine erste Nietverbindung 95 verbunden. Der Befestigungsabschnitt 91 erstreckt sich dabei radial von außen nach innen. Er ist quer zur Außenverzahnung 75 des zweiten Lamellenträgers 70 ausgerichtet. Am ersten Längsende 90 ist das sonst schräubenartig ausgestaltete Federmittel 85 abgeflacht, so dass das erste Längsende 95 eine gemeinsame Ebene auf dem Befestigungsabschnitt 91 aufweist. Dadurch kann an der ersten Nietverbindung 95 eine große Auflagefläche und somit eine gute Drehmomentübertragung zwischen dem Befestigungsabschnitt 91 und dem Federmittel 85 bereitgestellt werden.

Radial innenseitig zum zweiten Lamellenträger 70 ist ferner eine Nabe 100 vorgesehen. Die Nabe 100 ist dabei über eine Welle-Nabe-Verbindung 105 mit einer Getriebeeingangswelle 110 verbunden. Dabei umgreift die Nabe 100 die Getriebeeingangswelle 110 umfangsseitig. Die Nabe 100 wird mittels einer Nabenmutter 115 auf der Getriebeeingangswelle 110 in axialer Richtung an der Getriebeeingangswelle 110 durch Verspannung an einem Absatz 111 der Getriebeeingangswelle 110 fixiert.

Die Nabe 100 weist einen Befestigungsabschnitt 120 auf, der sich radial von innen nach außen in Richtung dem zweiten Lamellenträger 70 erstreckt. Der Befestigungsabschnitt 120 der Nabe 100 ist dabei axial gegenüber dem Befestigungsabschnitt 91 des zweiten Lamellenträgers 70 beabstandet angeordnet. Die Befestigungsabschnitte 91, 120 des zweiten Lamellenträgers 70 bzw. der Nabe 100 enden dabei auf ähnlicher radialer Höhe. Das Federmittel 85 ist an einem zweiten Längsende 125 mittels einer zweiten Nietverbindung 130 mit dem Befestigungsabschnitt 120 der Nabe 100 verbunden. In der Ausführungsform ist das zweite Längsende 125 des Federmittels 85 identisch zu dessen ersten Längsende 90 ausgebildet.

Die Getriebeeingangswelle 110 ist in einem Gehäuse 135 eine Getriebes (nicht dargestellt) mittels eines Lagers 140 gelagert. Das Lager 140 ist als Nadellager ausgebildet. Axial zwischen dem Lager 140 und der Welle-Nabe-Verbindung 105 bzw. zwischen dem Gehäuse 135 und der Nabe 100 ist eine Gegenplatte 145 der Kupplungseinrichtung 10 angeordnet, die sich radial von innen bis radial nach außen in den Bereich des Lamellenpakets 50 erstreckt. Die Gegenplatte 145 ist dabei ausgebildet, um die oberseitig in Fig. 2 in das Lamellenpaket 50 eingeleitete Anpresskraft F zur Bereitstellung eines Reibschlusses zwischen den Reibpartnern 55, 60 aus dem Lamellenpaket 50 abzuleiten bzw. eine Gegenkraft F_{G} bereitzustellen. Die Gegenplatte 145 weist einen Abstützabschnitt 150 auf, der zwischen der Nabe 100 und dem Gehäuse 135 angeordnet ist. Der Abstützabschnitt 150 liegt dabei axial an einem dem Abstützabschnitt 150 zugeordneten Gehäuseabschnitt 155 des Gehäuses 135 an. Dadurch kann der interne Kraftfluss zum Komprimieren der Reibpartner 55, 60 geschlossen werden. Der Abstützabschnitt 150 wird dabei axial in beide Richtungen durch die Komprimierung der Nabenmutter 115 an der Getriebeeingangswelle 110 gesichert.

Das Federmittel 85 ist in der Ausführungsform als Blattfeder ausgebildet (vgl. Fig. 3). Das Federmittel 85 umfasst dabei eine erste Federlage 156, eine zweite Federlage 160 und eine dritte Federlage 165. Die Federlagen 156, 160, 165 sind dabei geschichtet übereinander angeordnet. Selbstverständlich ist auch denkbar, dass eine andere Anzahl von Federlagen gewählt wird. Die Federlagen 156, 160, 165 liegen dabei jeweils flächig an einer Oberseite 170, 175 bzw. an einer der Oberseite 170, 175 zugewandten Unterseite 180, 185 der jeweils benachbarten Federlage 156, 160 an. Durch das flächige Anliegen werden die einzelnen Federlagen 156, 160, 165 in Längsrichtung gegenseitig abgestützt, so dass dadurch ein höheres Drehmoment über das Federmittel 85 übertragen werden kann.

Um ein radiales Ausweichen der einzelnen Federlagen 156, 160, 165 zu vermeiden, weist die oberhalb der zweiten Federlage 160 angeordnete erste Federlage 156 eine Einbuchtung 190 auf, in die eine Ausbuchtung 195 der zweiten Federlage 160 eingreift. Die Einbuchtung 190 ist korrespondierend zu der Ausbuchung 195 ausgebildet. Das gleiche gilt ebenso für die Bereitstellung der Einbuchtung 190 durch die zweite Federlage 160 für die dritte Federlage 165. In der Ausführungsform erstrecken sich die Einbuchtungen 190 bzw. die Ausbuchtungen 195 in Umfangsrichtung über einen Teilbereich des Federmittels 85. Selbstverständlich ist auch denkbar, dass auf die Ein- bzw. Ausbuchtung 190, 195 verzichtet wird bzw. die Ein- bzw. Ausbuchtungen 190, 195 andersartig ausgebildet sind. Die Ein- bzw. Ausbuchtungen 190, 195 werden vorzugsweise mittels eines Pressverfahrens in die Federlagen 156, 160, 165 eingebracht. Auch ist denkbar, dass die Ausrichtung der Einbuchtungen bzw. der Ausbuchtungen 190, 195 andersartig gewählt ist.

Um die Anpresskraft F ist das Federmittel 85 zwischen dem zweiten Lamellenträger 70 und der Nabe 100 vorgespannt montiert. Zum Ausrücken der Kupplungseinrichtung 100 ist oberseitig des zweiten Lamellenträgers 70 ein Betätigungselement 205 vorgesehen. Das Betätigungselement 205 kann beispielsweise als Zugstück 335 ausgebildet sein. Radial innenseitig zum Betätigungselement 205 ist ein Ausrücklager 210 vorgesehen, an dem das Betätigungselement 205 gelagert ist. Radial innenseitig zu dem Ausrücklager 210 ist eine Betätigungsstange 215 vorgesehen. Die Betätigungsstange 215 kann beispielsweise gekoppelt mit einem Kupplungspedal sein, um das Betätigungselement 205 axial zu verschieben. Das Betätigungselement 205 dient dazu, die Kupplungseinrichtung 10 zu öffnen oder zu schließen. Dazu kann das Betätigungselement 205 über die Betätigungsstange 215 in axialer Richtung verschoben werden, wobei bei einer axialen Verschiebung des Betätigungselements 205 das Federmittel 85 entspannt wird und so ein Reibschluss zwischen den Reibpartnern aufgehoben wird.

Um ein sanftes Einkuppeln zu ermöglichen, weist der zweite Lamellenträger 70 einen Kompressionsabschnitt 221 mit einem Anschlagsabschnitt 225 und einer Modulationsfeder 230 auf. Der Anschlagsabschnitt 225 erstreckt sich radial von innen nach außen und ist im Wesentlichen parallel zu den Reibpartnern 55, 60 angeordnet. Die Modulationsfeder 230 ist als teilringförmig ausgebildete Blattfeder ausgebildet. Ein freies Ende 235 der Modulationsfeder 230 ist dem Lamellenpaket 50 zugewandt. Ein festes Ende 240 der Modulationsfeder 230 ist mit dem Anschlagsabschnitt 225 verbunden. Die Modulationsfeder 230 ist in Umfangrichtung verlaufend schräg in Richtung dem Lamellenpaket 50 vorgespannt. Dabei ragt die Modulationsfeder 230 am freien Ende 235 über eine Anschlagsfläche 241 des Anschlagsabschnitts 225 hinaus. Um die Modulationsfeder 230 kostengünstig zu fertigen, ist radial innenseitig und außenseitig der Modulationsfeder 230 eine erste Ausnehmung 245 vorgesehen. Dadurch kann die Modulationsfeder 230 bzw. der Anschlagsabschnitt 225 kostengünstig und einfach hergestellt werden.

Der Anschlagsabschnitt 225 dient dazu, die Anpresskraft F in das Lamellenpaket 50 weiterzuleiten. Beim Einkuppeln der Kupplungseinrichtung 10 wird der Lamellenträger 70 mit der Anpresskraft F beaufschlagt. Dabei verschiebt sich der Anschlagsabschnitt 225 des zweiten Lamellenträgers 70 in Richtung dem Lamellenpaket 50. Dabei tritt zuerst das freie Ende 235 der Modulationsfeder 230 in Berührkontakt mit dem Lamellenpaket 50. Dabei drückt das freie Ende 235 der Modulationsfeder 230 die Reibpartner 55, 60 aneinander, so dass bereits in dieser Phase ein Reibschluss zwischen den Reibpartnern 55, 60 zur drehmomentschlüssigen Verbindung der Eingangsseite 15 mit der Ausgangsseite 20 bereitgestellt wird. Da die Modulationsfeder 230 mit der Anpresskraft F beaufschlagt wird und die Modulationsfeder 230 bezogen auf die Anpresskraft F biegeweich ausgestaltet ist, gibt die Modulationsfeder 230 nach und federt in Richtung dem Anschlagsabschnitt 225 ein. Die Modulationsfeder 230 presst während des Einfederns die Reibpartner 55, 60 weiter aneinander. Die Anpresskraft F steigt mit zunehmenden Einfedern der Modulationsfeder 230 an, so dass die Reibpartner 55, 60 weiter komprimiert werden. Ist der zweite Lamellenträger 70 soweit axial verschoben, dass die Anschlagsfläche 241 an einem der Anschlagsfläche 241 zugewandten Reibpartner 55, 60 anliegt, so wird das Lamellenpaket 50 mit der vollen Anpresskraft F beaufschlagt. Durch die Modulationsfeder 230 wird das Lamellenpaket 50 vor dem Anschlagen des Anschlagsabschnitts 225 an dem Lamellenpaket 50 bereits sanft komprimiert, so dass ein sanftes Einkuppein ermöglicht wird. Dadurch kann eine Dosierbarkeit der Kupplungseinrichtung 10 erhöht und gleichzeitig die Rupfneigung reduziert werden. Durch die Integration der Modulationsfeder 230 in den zweiten Lamellenträger 70 kann diese kostengünstig und einfach mittels eines Stanzbiegeverfahrens hergestellt werden.

Um einen Wechsel der Reibpartner 55, 60 zu ermöglichen, weist das Betätigungselement 205 einen im Wesentlichen senkrecht zur Drehachse 25 verlaufenden Koppelabschnitt 250 auf. Der Koppelabschnitt 250 ist mit einem parallel zur Drehachse 25 verlaufenden Lagerabschnitt 255 verbunden. An dem Lagerabschnitt 255 ist radial innenseitig das Ausrücklager 210 angeordnet. Der Koppelabschnitt 250 weist in Umfangsrichtung eine verlaufende Öffnung 260 auf.

Der zweite Lamellenträger 70 weist radial innenseitig angrenzend an den Befestigungsabschnitt 91 eine Halteeinrichtung 265 auf. Die Halteeinrichtung 265 umfasst eine Haltezunge 270, die mit einem festen Ende 275 der Haltezunge 270 mit dem Befestigungsabschnitt 91 verbunden ist. An einem freien Ende 280 der Haltezunge 270 ist ein Sperrelement 285. Das Sperrelement 285 durchgreift die Öffnung 260 im Koppelabschnitt 250. Die Haltezunge 270 ist dabei ausgebildet, das Sperrelement 285 radial nach außen zu drücken, so dass das Sperrelement 285 den Koppelabschnitt 250 auf einer dem Befestigungsabschnitt 91 abgewandten Seite hintergreift. Dadurch wird das Betätigungselement 205 mit dem zweiten Lamellenträger 70 gekoppelt. Auf diese Weise wird eine einfache Demontierbarkeit der Kupplungseinrichtung 10 zum Wechsel der Reibpartner 55, 60 gewährleistet. Um ein einfaches Hintergreifen zu ermöglichen, kann das Sperrelement 285 beispielsweise eine radial nach außen gerichtete Rastnase 290 aufweisen, die den Koppelabschnitt 250 hintergreift. Dabei kann das Sperrelement 285 in einem Querschnitt quer zur Drehachse 25 einen T-förmigen Querschnitt aufweisen. Selbstverständlich ist auch denkbar, dass andere Arten von Sperrmechanismen an der Haltezunge 270 angeordnet werden, um das Betätigungselement 205 zu fixieren.

Wird das Lamellenpaket 50 mit der Anpresskraft F beaufschlagt, so wird die Eingangsseite 15 drehmomentschlüssig mit der Ausgangsseite 20 beaufschlagt. Dabei wird das Drehmoment aus dem zweiten Lamellenträger 70 über die erste Nietverbindung 95 in das Federmittel 85 eingeleitet. Das Federmittel 85 leitet das Drehmoment weiter und überträgt dieses mittels der zweiten Nietverbindung 130 in die Nabe 100, welche das eingeleitete Drehmoment über die Welle-Nabe-Verbindung 105 in die Getriebeeingangswelle 110 ableitet. Durch den axialen Versatz des Befestigungsabschnitts 120 der Nabe 100 zu dem Befestigungsabschnitt 91 des zweiten Lamellenträgers 70 und somit der schraubenförmigen Ausrichtung der Federmittel 85 fungiert in der Ausführungsform das Federmittel 85 als Kniehebel (vgl. Fig. 2). Das Drehmoment entspricht an der ersten Nietverbindung 95 einer Kraft Fₐ. Da das Federmittel 85 schraubenförmig ausgebildet ist, weist die erste Nietverbindung 95 gegenüber der zweiten Nietverbindung 130 einen Versatz H auf. Bei Einleitung des Drehmoments M bzw. der zum Drehmoment M korrespondierenden Kraft Fₐ in das Federmittel 85 wird durch das um eine Neigung α gegenüber einer Ebene senkrecht zur Drehachse 25 geneigte Federmittel 85 in einen Axialanteil F_{z} und einen umfangsseitigen Anteil Fₓ zerlegt. Dabei entspricht der Axialanteil der in das Federmittel 85 eingeleiteten Kraft Fₐ einer in Fig. 2 gezeigten Kraft F_{z} und der umfangsseitige Anteil entspricht einer Kraft Fₓ. Die Kraft Fₓ wird als Drehmoment weiter aus dem Federmittel 85 über die zweite Nietverbindung 130 in die Nabe 100 eingeleitet. Durch die Verspannung des Federmittels 85 zwischen dem zweiten Lamellenträger 70 und der Nabe 100, wird die Kraft F_{z} als Verstärkungskraft über die erste Nietverbindung 95 in den Befestigungsabschnitt 91 eingeleitet. Der zweite Lamellenträger 70 bzw. dessen Anschlagsabschnitt 225 wird dadurch zusätzlich zur Anpresskraft F mit der Verstärkungskraft F_{z} beaufschlagt, so dass die Reibpartner 55, 60 verstärkt aneinander angepresst werden.

Die Nabe 100 und die Getriebeeingangswelle 105 sind in axialer Richtung fest. Soll eine Ausrückkraft zum öffnen der Kupplungseinrichtung 10 abnehmen, so gewährleistet das Federmittel 85, dass der zweite Lamellenträger 70 die Reibpartner 55, 60 wieder spannt. Eine Korbeinheit des zweiten Lamellenträgers 70 übernimmt in der Ausführungsform keine axialen Kräfte, deswegen reicht das radiale Nadellager 140 für die Lagerung auf der Getriebeeingangswelle aus.

In der Ausführungsform ist der Lamellenträger 40, 70 geschlossen und gerollt ausgebildet. Selbstverständlich ist auch denkbar, den Lamellenträger offen, gestanzt und mit einem Drahtring vor einer Fliehkraft abgestützt, auszubilden.

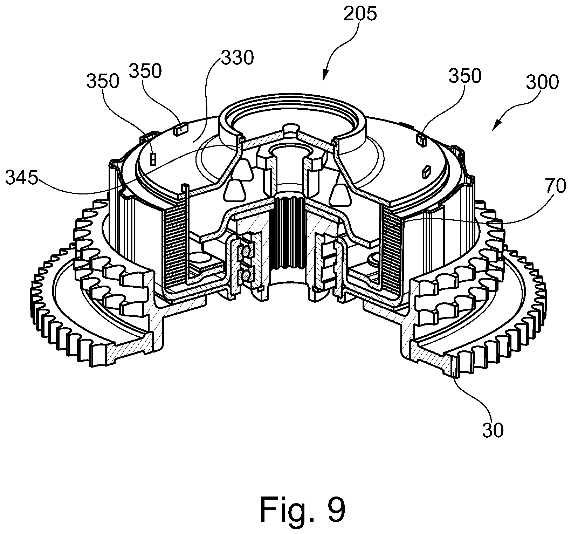

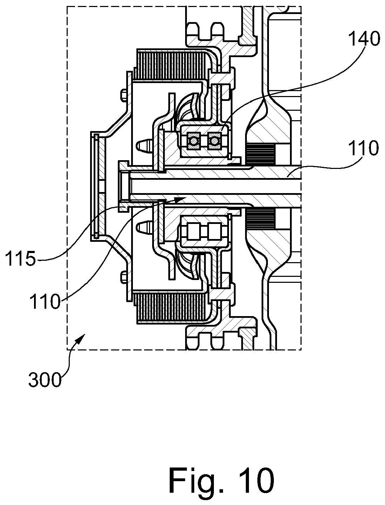

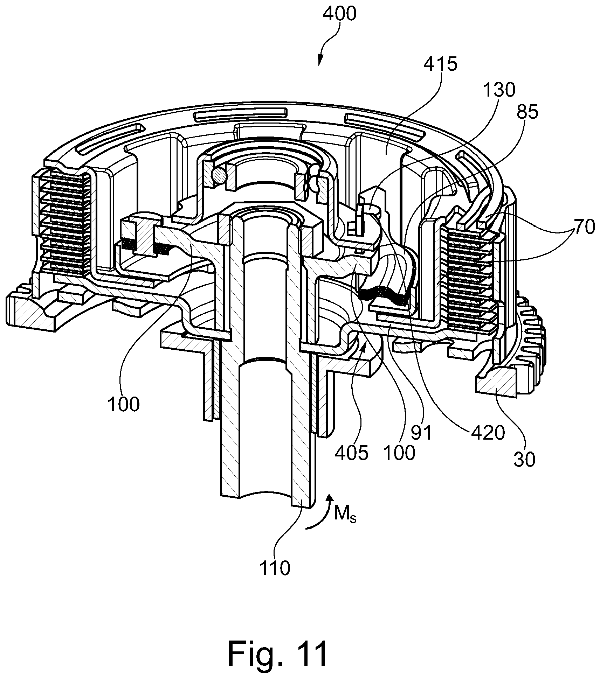

Fig. 10 zeigt eine perspektivische Schnittansicht durch eine Kupplungseinrichtung 300 gemäß einer zweiten Ausführungsform und Fig. 11 eine perspektivische Schnittansicht durch die in Fig. 9 gezeigte Kupplungseinrichtung 300. Die Kupplungseinrichtung 300 ist im Wesentlichen identisch zu den in den Fign. 1 bis 9 gezeigten Kupplungseinrichtungen 10 ausgebildet. Abweichend dazu weisen die in Fign. 10 und 11 gezeigten Kupplungseinrichtungen 300 keine Gegenplatte auf. Die Anpresskraft F und die Verstärkungskraft F_{z} werden in der Ausführungsform über einen radial nach außen verlaufenden Gegenabschnitt 305 des ersten Lamellenträgers 40 abgestützt. Der Gegenabschnitt 305 ist dabei mit dem Primärrad 30 drehmomentschlüssig verbunden. Ferner schließt sich radial innenseitig an dem ersten Lamellenträger 40 an den Gegenabschnitt 305 ein Abstützabschnitt 310 an. Das Lager 140 ist in der Ausführungsform als zweireihig ausgebildetes Kugellager ausgeführt. Der Abstützabschnitt 310 ist dabei radial außenseitig der Nabe 100 im Bereich der Welle-Nabe-Verbindung 105 angeordnet. Das Lager 140 weist einen inneren Lagerring 315 und einen äußeren Lagerring 320 auf. Zwischen den beiden Lagerringen 315, 320 sind die Wälzkörper 325 angeordnet. Der Abstützabschnitt 310 liegt dabei stirnseitig an dem äußeren Lagerring 320 des Lagers 140 an, so dass zuverlässig die Anpresskraft F und die Verstärkungskraft F_{z} über den Gegenabschnitt 305 und den Abstützabschnitt 310 am Lager 140 abgestützt werden kann. Dadurch kann insgesamt die Kupplungseinrichtung 300 kostengünstiger und einfacher als in den Fign. 1 bis 9 gezeigt ausgebildet werden.

In Fig. 9 ist die Kupplungseinrichtung 300 in geschlossenem Zustand dargestellt. Das Betätigungselement 205 umfasst ferner ein Zugstück 330. Das Zugstück 330 ist über eine dritte Nietverbindung 350 mit dem zweiten Lamellenträger 70 verbunden. Denkbar wäre hier auch eine Verbindung mit Schrauben oder ein Bajonettverschluss. Das Ausrücklager 210 zieht das Zugstück 330 in Figur 9 nach oben. Das Zugstück 330 zieht über den Zuganker 335 den zweiten Lamellenträger 70. Überwindet eine Ausrückkraft eine Spannkraft des Federmittels, das die Anpresskraft F erzeugt, so sind die Reibpartner 55, 60 ungespannt und es kann kein Moment übertragen werden.

Ferner ist denkbar, dass eine Betätigung der Kupplungseinrichtungen 10, 300, 400, 500, 600 über ein Gestänge durch die Getriebeeingangswelle erfolgt. Dieses Gestänge betätigt direkt eine Ausrückscheibe, welche mit einem Sägering im Zugstück 335 axial fixiert ist. Das Zugstück betätigt aufgrund der Vernietung mit dem Lamellenträger die Blattfedern. Es wird ein Abhub erzeugt und die Drehmomentübertragung ist unterbrochen.

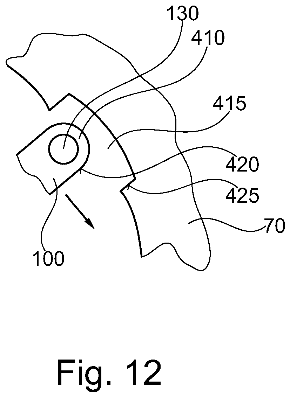

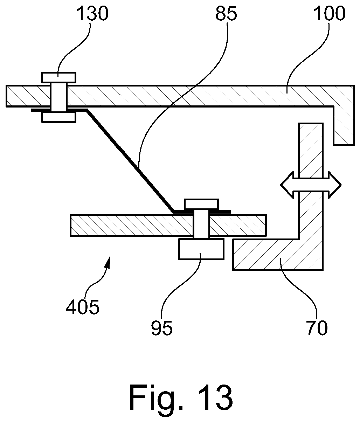

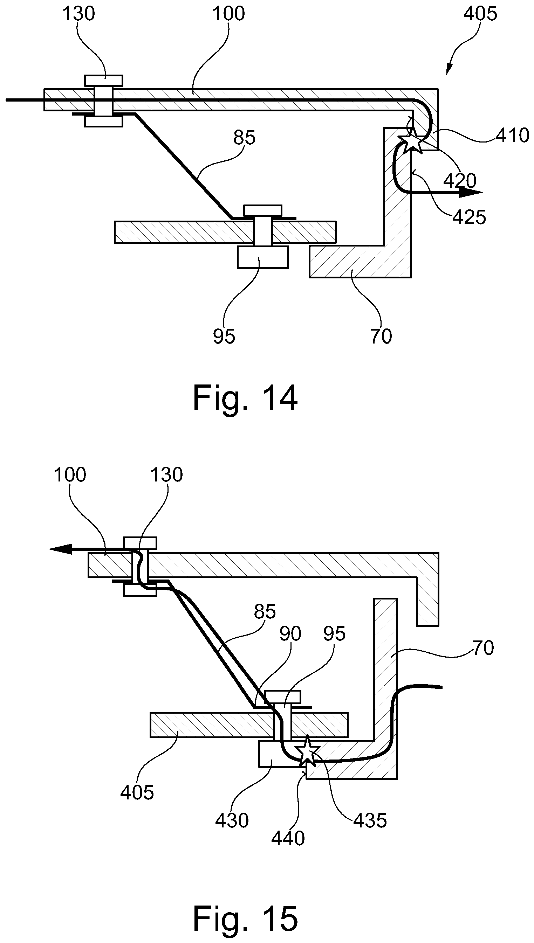

Fig. 11 zeigt eine perspektivische Schnittansicht durch eine Kupplungseinrichtung 400 gemäß einer dritten Ausführungsform. Fig. 12 zeigt einen Querschnitt durch die in Fig. 11 gezeigte Kupplungseinrichtung 400. Fig. 13 zeigt eine schematische Darstellung der in Fig. 11 gezeigten Kupplungseinrichtung 400. Fig. 14 zeigt eine schematische Darstellung eines Momentenflusses der in den Fign. 12 und 13 gezeigten Kupplungseinrichtung im Schubbetrieb. Fig. 15 zeigt eine schematische Darstellung eines Momentenflusses der in den Fign. 12 und 13 gezeigten Kupplungseinrichtung im Zugbetrieb.

Die Kompressionseinrichtung 400 entspricht im Wesentlichen der in den Fign. 1 bis 9 gezeigten ersten Kupplungseinrichtung 10. Die in den Fign. 1 bis 9 gezeigte Kupplungseinrichtung 10 ist vor allem für den Zugbetrieb ausgebildet, da hierbei zusätzlich zur Anpresskraft F die Verstärkungskraft F_{z} durch das Federmittel 85 bereitgestellt wird. Im Schubbetrieb, also wenn über die Getriebeeingangswelle 110 das Drehmoment M in die Kupplungseinrichtung 10 eingeleitet wird, kann das Federmittel 85 keine Verstärkungskraft F_{z} zum zusätzlichen Verspannen der Reibpartner 55, 60 bereitstellen. Im Gegenteil bewirkt das Federmittel 85 in diesem Betrieb eine Reduktion der durch das Federmittel 85 bereitgestellten Anpresskraft F. Daher ist in den Fign. 1 bis 9 die Kupplungseinrichtung 10 mit einem verstärkt ausgebildeten Federmittel 85 ausgestattet, das eine Anpresskraft F bereitstellt, die sowohl im Schub- als auch im Zugbetrieb ausreichend Kraft zum Verspannen der Reibpartner 55, 60 bereitstellt. Nur so kann der in den Fign. 1 bis 9 gezeigten Kupplungseinrichtung 10 ein zuverlässiger Drehmomentschluss zwischen der Eingangsseite 15 und der Ausgangsseite 20 bereitgestellt werden.

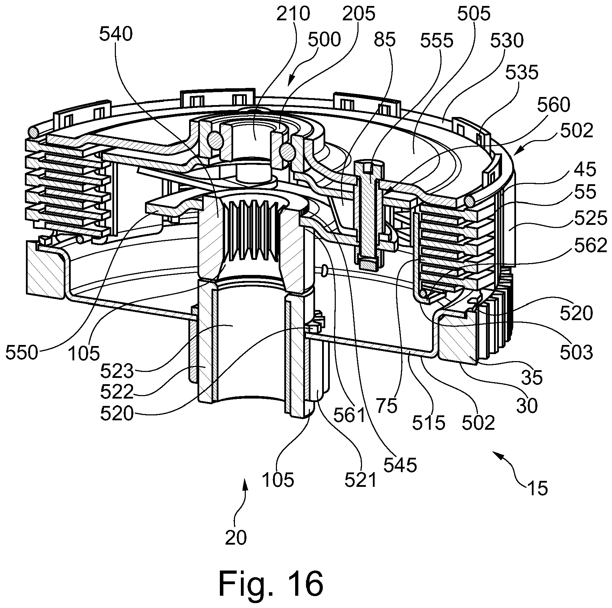

Um die Kupplungseinrichtung 400 besonders leichtgängig ausgestalten zu können, weist die in den Fign. 12 bis 16 gezeigte Kupplungseinrichtung 400 gemäß einer dritten Ausführungsform ein zusätzliches Abstützelement 405 auf, das ausgebildet ist, das Federmittel 85 zu fixieren. Das Abstützelement 405 ist dabei axial zwischen dem Federmittel 85 und dem Befestigungsabschnitt 91 des zweiten Lamellenträgers 70 angeordnet. Der Lamellenträger 70 weist abweichend von der in den Fign. 1 bis 9 gezeigten Ausführungsform keine erste Nietverbindung 95 mit dem Federmittel 85 auf, stattdessen verbindet die erste Nietverbindung das Abstützelement 405 mit dem Federmittel 85. Zur erleichterten Darstellung ist in den Fign. 15 und 16 der Drehmomentfluss innerhalb der Kupplungseinrichtung schematisch pfeilförmig dargestellt. Ferner wird darauf hingewiesen, dass Fign. 14 bis 16 eine translatorische Ansicht der Kupplungseinrichtung 400 sind, bei denen eine horizontale Bewegung der Komponenten der Kupplungseinrichtung einer in Fig. 11 gezeigten Bewegung in Umfangsrichtung entspricht.

Im Schubbetrieb wird das Drehmoment M_{S} über die Nabe 100 in der Kupplungseinrichtung 400 an eine radial außenseitig an der Nabe 100 angeordnete Nase 410 weitergeleitet. An der Nase 410 kann ferner die zweite Nietverbindung 130 angeordnet sein. Die Nase 410 greift dabei in eine zweite Ausnehmung 415 des zweiten Lamellenträgers 70 ein. Die zweite Ausnehmung 415 des zweiten Lamellenträgers 70 verläuft dabei in axialer Richtung. Die Nase 410 weist eine in axialer Richtung verlaufende Anschlagsfläche 420 auf. Die zweite Ausnehmung 415 weist eine radial von innen nach außen verlaufende Anlauffläche 425 auf, die gegenüberliegend zur Anschlagsfläche 420 angeordnet ist. Im Schubbetrieb, wie in Fig. 12 gezeigt, verdreht sich die Nabe 100 gegenüber dem zweiten Lamellenträger 70 (schematisch in Fig. 12 mittels Pfeil dargestellt). Nach Überschreitung des umfangsseitigen Bewegungsspiels schlägt die Anschlagsfläche 420 der Nase 410 an der Anlauffläche 425 an. Nach Anschlagen wird das Drehmoment M_{S} über die Anschlagsfläche 420 bzw. über die Anlauffläche 425 von der Nabe 100 in den zweiten Lamellenträger 70 übertragen. Eine Drehmomentübertragung über das Federmittel 85 wird dadurch vermieden. Ferner kann dadurch das Federmittel 85 nach wie vor den zweiten Lamellenträger 70 gegenüber der Nabe 100 in axialer Richtung verspannen, sofern das Federmittel 85 verspannt vormontiert wurde. Auf diese Weise wird eine Reduzierung der Anpresskraft F im Schubbetrieb zuverlässig vermieden, so dass das Federmittel 85 nur eine geringere Anpresskraft F als bei der in den Fign. 1 bis 9 zeigten Ausführungsform bereitstellen muss.

Im Zugbetrieb, wie in Fig. 15 dargestellt, wird über den zweiten Lamellenträger 70 das Drehmoment M aus dem Lamellenpaket 50 abgeleitet. An einem Nietkopf 430 der ersten Nietverbindung 95 ist eine weitere Anschlagsfläche 435 vorgesehen. Die weitere Anschlagsfläche 435 ist in Umfangsrichtung gegenüberliegend zu einer Lamellenanschlagsfläche 440 des zweiten Lamellenträgers 70 angeordnet. Wird das Drehmoment M über den zweiten Lamellenträger 70 auf die Nabe 100 übertragen, so verdreht sich der Lamellenträger 70 gegenüber der Nabe 100. Dabei schlägt die Lamellenanschlagsfläche 440 an der weiteren Anschlagsfläche 435 an. Dadurch wird das Drehmoment von dem zweiten Lamellenträger 70 auf den Nietkopf 430 der ersten Nietverbindung 95 übertragen. Aus der ersten Nietverbindung 95 wird das Drehmoment M über das Federmittel 85 in die zweite Nietverbindung 130 weitergeleitet und dort in die Nabe 100 eingeleitet. Auf diese Weise kann mittels des Drehmoments, wie in den Fign. 1 bis 5 bereits beschrieben, das Federmittel 85 verspannt werden und so eine zusätzliche Verstärkungskraft Fₓ zum Anpressen der Reibpartner 55, 60 aneinander bereitgestellt werden. Ferner wird mit der oben beschriebenen Ausgestaltung vermieden, dass im Schubbetrieb die Anpresskraft durch die geänderte Drehmomentflussrichtung reduziert wird. Das Abstützelement 405 dient dabei zum Fixieren des Federmittels 85.

Selbstverständlich ist auch denkbar, dass auf das Abstützelement 405 verzichtet wird, wenn das Federmittel 85 steif genug ausgebildet ist. In diesem Falle ist auch denkbar, dass der zweite Lamellenträger 70 direkt an dem Federmittel 85 am ersten Längsende 90 des Federmittels 85anschlägt. Das Abstützelement 405 ist in der Ausführungsform L-förmig ausgebildet. Alternativ sind auch andere Ausgestaltungen denkbar. Durch die L-förmige Ausgestaltung wird gewährleistet, dass das Abstützelement 405 insgesamt in Umfangsrichtung steifer ausgebildet ist. Alternativ ist selbstverständlich auch denkbar, das Abstützelement 405 mit Sicken zu versehen. Auch ist denkbar, dass das Abstützelement 405 scheibenförmig ausgebildet ist, da dadurch eine besonders kompakte Ausgestaltung der Kupplungseinrichtung 400 bereitgestellt werden kann.

Fig. 16 zeigt eine perspektivische Schnittansicht durch eine Kupplungseinrichtung 500 gemäß einer vierten Ausführungsform. Die Kupplungseinrichtung 500 ist im Wesentlichen identisch zu den in den Fign. 1 bis 16 gezeigten Ausführungsformen ausgestaltet. Abweichend dazu ist jedoch die Betätigung, wie bei den in den Fign. 1 bis 16 gezeigten Ausführungsformen der Kupplungseinrichtungen 10, 300, 400, eine gedrückte Betätigung. Die Kupplungseinrichtung 500 umfasst einen ersten Lamellenträger 502, einen zweiten Lamellenträger 503 und eine Gegenplatte 505. Um eine gedrückte Betätigung realisieren zu können, ist in der Ausführungsform die Anordnung der Gegenplatte 505 zu dem zweiten Lamellenträger 503 gegenüber der in den Fign. 1 bis 10 gezeigten Ausgestaltung vertauscht. Die Gegenplatte 505 ist in der Ausführungsform radial angrenzend an das Betätigungselement 205 angeordnet. Der zweite Lamellenträger 502 ist gespiegelt ausgebildet zu der in den Fign. 1 bis 10 gezeigten Ausführungsform, so dass der Anschlagsabschnitt 225 unterseitig des Lamellenpakets 50 angeordnet ist. Der erste Lamellenträger 502 weist einen quer zur Drehachse 25 verlaufenden Stirnabschnitt 515 auf. Der Stirnabschnitt 515 weist radial innenseitig eine Innenverzahnung 520 auf. Die Innenverzahnung 520 greift in eine Außenverzahnung 521 einer Haltemuffe 522 ein. Die Haltemuffe 522 weist radial innenseitig ein Gleitlager 523 auf, das umfangsseitig die Getriebeeingangswelle 110 umgreift und so die Haltemuffe 522 drehbar auf der Getriebeeingangswelle 110 lagert. Der erste Lamellenträger 502 weist ferner einen Korb 525 auf, der die Innenverzahnung 45 aufweist, um eine Drehmomentübertragung auf die Außenverzahnung 65 des ersten Reibpartners 55 zu gewährleisten. Oberseitig ist an dem Korb 525 ein Berstring 530 angeordnet, der den Korb 525 in axialer Richtung schließt und die ersten Reibpartner 55 axial fixiert. Der Berstring 530 wird mittels Haltelaschen 535 an dem Korb fixiert.

Oberhalb der Haltemuffe 522 ist in axialer Richtung angrenzend eine Nabe 540 vorgesehen. Die Nabe 540 weist eine Welle-Nabe-Verbindung 105 auf, mit der die Getriebeeingangswelle 110 mit der Nabe 540 verbunden wird. Außenseitig weist die Nabe 540 eine zweite Welle-Nabe-Verbindung 545 auf, mit der radial außenseitig eine Scheibe 550 mit der Nabe 540 verbunden wird. Die Scheibe 550 ist ihrerseits mittels einer Schraubverbindung 555 radial außenseitig zu der Welle-Nabe-Verbinung 545 mit dem Federmittel 85 sowie der Gegenplatte 505 und dem zweiten Lamellenträger 70 verbunden. Die Schraubverbindung 555 ist dabei durch einen Ausbruch 560 im zweiten Lamellenträger 70 geführt, so dass eine Drehmomentübertragung über die Schraubverbindung 555 zwischen dem zweiten Lamellenträger 70 und der Scheibe 550 vermieden wird.

Um die Kupplungseinrichtung 500 zu öffnen, wird das Ausrücklager 210 in Richtung der Haltemuffe 522 gedrückt. Dabei wird der zweite Lamellenträger 503 axial nach unten verschoben. Die zweite Welle-Nabe-Verbindung 545 weist dabei einen Absatz 561 auf, die eine Verschiebung der Scheibe 550 in axialer Richtung beim Drücken der Kupplungseinrichtung 500 verhindert. Somit werden dabei die Federmittel 85 beim Ausrücken der Kupplungseinrichtung 500 gespannt.

Abweichend zu den oben beschriebenen Ausführungsformen ist eine Modulationsfeder 562 vorgesehen, die als Tellerfeder ausgebildet und zwischen dem Anschlagsabschnitt 225 und dem ersten Reibpartner 55 in axialer Richtung angeordnet ist. Ferner ist die Modulationsfeder 562 radial außenseitig zu einer Außenverzahnung 75 des zweiten Lamellenträgers 503 angeordnet. Die Funktionsweise der Modulationsfeder 562 entspricht der in den Fign. 1 bis 8 gezeigten Modulationsfeder.

Es wird darauf hingewiesen, dass in der Ausführungsform die Verstärkung zum Anpressen der Reibpartner 55, 60 zusätzlich zur Anpresskraft F getriebeseitig bzw. abtriebsseitig erfolgt. Selbstverständlich wäre auch denkbar, dass die Verstärkung mittels der Federmittel 85 eingangsseitig bzw. motorseitig erfolgt.

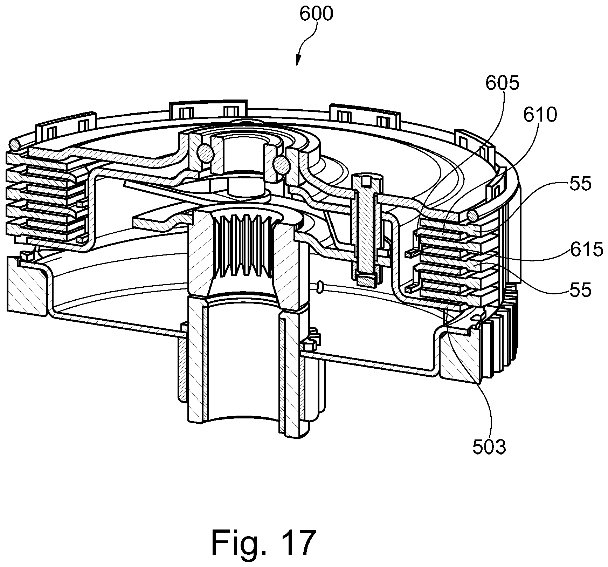

Fig. 17 zeigt einen perspektivischen Schnitt durch eine Kupplungseinrichtung 600 gemäß einer fünften Ausführungsform. Die Kupplungseinrichtung 600 ist im Wesentlichen identisch zu der in Fig. 16 gezeigten Kupplungseinrichtung 500. Abweichend dazu ist zwischen den ersten Reibpartnern 55 ein zweiter Reibpartner 605 vorgesehen. Der zweite Reibpartner 605 weist einen zwischen den ersten Reibpartnern 55 angeordneten Scheibenabschnitt 610 auf. Der Scheibenabschnitt 610 ist durch einen axial verlaufenden Axialabschnitt 615 jeweils miteinander verbunden. Der Axialabschnitt 615 erstreckt sich im Wesentlichen über die gesamte Länge des zweiten Lamellenträgers 70. Der Axialabschnitt 615 greift dabei in den zweiten Lamellenträger 70 ein, so dass ein Drehmoment kommend aus den ersten Reibpartnern 55 über den Scheibenabschnitt 610 in den Axialabschnitt 615 abgeleitet werden kann, welcher dieses an den zweiten Lamellenträger 70 übertragen kann. Auf diese Weise kann die in den Fign. 1 bis 11 gezeigte Kupplungseinrichtung 10, 300, 400, 500 dahingehend modifiziert werden, dass der zweite Lamellenträger 70 besonders kostengünstig ausgeführt ist.

Die beschriebene Ausgestaltung hat ferner den Vorteil, dass durch die Verbindungen Scheibenabschnitte 610 durch die Axialabschnitte 615 jeder Reibpartner 55, 605 sein Moment und das Moment des voranstehenden Reibpartners 55, 605 aufnimmt. Auf diese Weise kann das zu übertragende Moment beim letzten axial angrenzenden Reibpartner 55, 60 aus dem Reibpartner 55, 60 durch den zweiten Lamellenträger 503 abgegriffen werden. Die Betätigung der Kupplungseinrichtung 600 macht nämlich durch einen Abhub des untersten Reibpartners 60 die Reibpartner 55, 60 frei. Der Lamellentausch erfolgt durch das Öffnen der Schraubverbindung 555. Unabhängig von der Kupplungsart (Druckfederkupplung, Blattfederkupplung, Tellerfederkupplung) zeigt diese Ausführungsform der Kupplungseinrichtung 600 alternative Bauformen der Einzelteile. Hier sind Korb sowie Lamellenträger 40, 70 offen mit Drahtringen 535 abgestützt, was einen Rolling Prozess verlangt.

Die oben beschriebenen Ausführungsformen haben den Vorteil, dass mittels des Kniehebelprinzips eine zusätzliche Verstärkungskraft Fₓ bereitgestellt werden kann, durch die ein erhöhtes Anpressen der Reibpartner 55, 60 erreicht wird. Die Verstärkung kann je nach Ausgestaltung durch eine Neigung a, also eine Schräganordnung des Federmittels 85 gegenüber einer Ebene senkrecht zur Drehachse 25, auf einfache Weise gewählt werden. Dadurch kann für die Kupplungseinrichtungen 10, 300, 400, 500, 600 eine erhöhte Drehmomentübertragung von der Eingangsseite 15 zur Ausgangsseite 20 bereitgestellt werden. Ferner kann mit einer optional vorgesehen Modulationsfeder die Kupplungseinrichtung 10, 300, 400, 500, 600 weicher dimensioniert werden.

Das Federmittel 85 kann somit in den oben gezeigten Ausführungsformen die Anpresskraft F erzeugen und/oder eine Verstärkung oder Reduzierung der Anpresskraft je nach Betrieb realisieren. Ferner kann mittels des Federmittels 85 ein Moment zwischen der Eingangsseite 15 und der Ausgangsseite übertragen werden. Durch das mehrfache Vorsehen von Federmitteln 85 kann des Weiteren eine einfache Zentrierung des zweiten Lamellenträgers 70, 502 erreicht werden.

Die in den Ausführungsformen gezeigten Kupplungseinrichtungen 10, 300, 400, 500, 600 sind als Mehrscheibenkupplungen ausgeführt, die sowohl nass als auch trocken ausgebildet sein können. Selbstverständlich ist auch denkbar, die oben beschriebene Verstärkung der Anpresskraft F auch bei Einscheibenkupplungseinrichtungen anzuwenden.

Die oben gezeigten Ausführungsformen des Federmittels 85 haben den Vorteil, dass das Federmittel als Blattfeder die Anpresskraft erzeugt und/oder eine Verstärkung oder Reduzierung der Anpresskraft je nach Betrieb realisiert und/oder das Moment des Lamellenträgers überträgt und/oder den zweiten Lamellenträger 70 zentriert.

In den oben gezeigten Ausführungsformen ist das Federmittel 85 zur Bereitstellung der Anpresskraft F als Druckfeder oder Tellerfeder ausgebildet. Alternativ ist auch denkbar, die Anpresskraft F mit einer Rampe zu erzeugen. Auch ist denkbar, dass zusätzlich zur Verstärkung der Anpresskraft ebenso eine Rampe vorgesehen ist. Dies hätte den zusätzlichen Vorteil, dass eine Zentrierung der Anpressplatte über eine Passung oder eine Verzahnung erzeugt werden kann.

### Bezugszeichenliste

- 10: Kupplungseinrichtung
- 15: Eingangsseite
- 20: Ausgangsseite
- 25: Drehachse
- 30: Primärrad
- 35: Verzahnung des Primärrads
- 40: Erster Lamellenträger
- 45: Innenverzahnung
- 50: Lamellenpaket
- 55: Erster Reibpartner
- 60: Zweiter Reibpartner
- 65: Außenverzahnung des ersten Reibpartners
- 70: Zweiter Lamellenträger
- 75: Außenverzahnung des zweiten Lamellenträgers
- 80: Innenverzahnung des zweiten Reibpartners
- 85: Federmittel
- 90: Erstes Längsende des Federmittels
- 91: Befestigungsabschnitt des zweiten Lamellenträgers
- 95: Erste Nietverbindung
- 100: Nabe
- 105: Welle-Nabe-Verbindung
- 110: Getriebeeingangswelle
- 115: Nabenmutter
- 120: Befestigungsabschnitt der Nabe
- 125: Zweites Längsende des Federmittels
- 130: Zweite Nietverbindung
- 135: Gehäuse
- 140: Lager
- 145: Gegenplatte
- 150: Abstützabschnitt
- 155: Gehäuseabschnitt
- 156: Erste Federlage
- 160: Zweite Federlage
- 165: Dritte Federlage
- 170: Oberseite
- 175: Oberseite
- 180: Unterseite
- 185: Unterseite
- 190: Einbuchtung
- 195: Ausbuchtung
- 205: Betätigungselement
- 210: Ausrücklager
- 215: Betätigungsstange
- 221: Kompressionsabschnitt
- 225: Anschlagsabschnitt
- 230: Modulationsfeder
- 235: Freies Ende der Modulationsfeder
- 240: Festes Ende der Modulationsfeder
- 241: Anschlagsfläche
- 245: Erste Ausnehmung
- 250: Koppelabschnitt
- 255: Lagerabschnitt
- 260: Öffnung
- 265: Halteeinrichtung
- 270: Haltezunge
- 275: Festes Ende der Haltezunge
- 280: freies Ende der Haltezunge
- 285: Sperrelement
- 290: Rastnase
- 300: Kupplungseinrichtung
- 305: Gegenabschnitt
- 310: Abstützabschnitt des ersten Lamellenträgers
- 315: Innerer Lagerring
- 320: Äußerer Lagerring
- 325: Wälzkörper
- 400: Kupplungseinrichtung
- 405: Abstützelement
- 410: Nase
- 415: Zweite Ausnehmung
- 420: Anschlagsfläche
- 425: Anlauffläche
- 430: Nietkopf
- 435: Weitere Anschlagsfläche
- 440: Lamellenanschlagsfläche
- 500: Kupplungseinrichtung
- 502: Erster Lamellenträger
- 503: Zweiter Lamellenträger
- 505: Gegenplatte
- 515: Stirnabschnitt
- 520: Innenverzahnung
- 521: Außenverzahnung
- 522: Haltemuffe
- 523: Gleitlager
- 525: Korb
- 530: Berstring
- 535: Haltelasche
- 540: Nabe
- 545: Zweite Welle-Nabe-Verbindung
- 550: Scheibe
- 555: Schraubverbindung
- 560: Ausbruch
- 561: Absatz
- 562: Modulationsfeder
- 600: Kupplungseinrichtung
- 605: zweiter Reibpartner
- 610: Scheibenabschnitt
- 615: Axialabschnitt

## Patentansprüche

1. Kupplungseinrichtung (10, 300, 400, 500, 600) umfassend:
- eine Eingangsseite (15) und eine Ausgangsseite (20), die drehbar um eine Drehachse (25) angeordnet sind, sowie
- wenigstens einen ersten Reibpartner (55) und wenigstens einen zweiten Reibpartner (60),
- wobei der erster Reibpartner (55) drehmomentschlüssig mit der Eingangsseite (15) verbunden ist,
- wobei der zweite Reibpartner (60) drehmomentschlüssig der Ausgangsseite (20) verbunden ist,
- wobei der erste und der zweite Reibpartner (55, 60) durch eine Anpresskraft (F) in Reibeingriff bringbar, um ein Drehmoment zwischen der Eingangsseite (15) und der Ausgangsseite (20) zu übertragen,
- wobei wenigstens ein Federmittel (85) vorgesehen ist,
- **dadurch gekennzeichnet, dass** das Federmittel (85) als Blattfeder ausgebildet ist, um die Anpresskraft (F) zu verstärken.

2. Kupplungseinrichtung (10, 300, 400, 500, 600) nach Anspruch 1, **dadurch gekennzeichnet, dass** das Federmittel (85) mit der Ausgangsseite (20) und dem zweiten Reibpartner (60) verbunden ist, wobei bei einer Drehmomentübertragung zwischen der Eingangsseite (15) und der Ausgangsseite (20) das Federmittel (85) zwischen dem zweite Reibpartner (60) und der Ausgangsseite (20) verspannt wird, wobei das Federmittel (85) ausgebildet ist, aus der Verspannung die Anpresskraft (F) zum Anpressen des beiden Reibpartner (55, 60) aneinander zu verstärkt.

3. Kupplungseinrichtung (10, 300, 400, 500, 600) nach Anspruch 1 oder 2, **dadurch gekennzeichnet, dass** das Federmittel (85) eine erste Federlage (156) und wenigstens eine zweite Federlage (160, 165) aufweist, wobei die erste Lage und die zweite Lage zumindest teilweise in Berührkontakt stehen.

4. Kupplungseinrichtung (10, 300, 400, 500, 600) nach Anspruch 3, **dadurch gekennzeichnet, dass** die erste Federlage (156) des Federmittels (85) eine Ausbuchtung (195) und die zweite Federlage (160, 165) des Federmittels (85) eine Einbuchtung (190) aufweist, wobei die Ausbuchtung (195) und die Einbuchtung (190) der Längserstreckung der Blattfeder folgt, wobei die Ausbuchtung (195) der ersten Lage in die Einbuchtung (190) der zweiten Lage eingreift.

5. Kupplungseinrichtung (10, 300, 400, 500, 600) nach einem der Ansprüche 1 bis 4, **dadurch gekennzeichnet, dass** das Federmittel (85) zumindest teilweise schraubenförmig um die Drehachse (25) geführt sind.

6. Kupplungseinrichtung (10, 300, 400, 500, 600) nach einem der Ansprüche 1 bis 5, **dadurch gekennzeichnet, dass** ein Lamellenträger (40, 70) vorgesehen ist, wobei der Lamellenträger (40, 70) mit dem ersten oder mit dem zweiten Reibpartner (55, 60) drehmomentschlüssig verbunden ist, wobei der Lamellenträger (40, 70) einen Kompressionsabschnitt (221) aufweist, der axial angrenzend an den ersten oder zweiten Reibpartner (55, 60) angeordnet ist.

7. Kupplungseinrichtung (10, 300, 400, 500, 600) nach Anspruch 6, **dadurch gekennzeichnet, dass** der Kompressionsabschnitt (221) wenigstens eine Modulationsfeder (230) und einen Anschlagsabschnitt (225) aufweist, wobei die Modulationsfeder (230) ein festes Ende (240) und ein freies Ende (235) aufweist, wobei das feste Ende (240) dem Lamellenträger (40, 70) verbunden ist, wobei das freie Ende (235) axial über den Anschlagsabschnitt (225) in Richtung dem ersten und/oder zweiten Reibpartner (55, 60) herausragt.

8. Kupplungseinrichtung (10, 300, 400, 500, 600) nach Anspruch 7, **dadurch gekennzeichnet, dass** eine Gegenplatte (145) vorgesehen ist, wobei die Gegenplatte (145) axial gegenüberliegend dem Anschlagsabschnitt (225) des Lamellenträger (40, 70)s angeordnet ist, wobei zwischen der Gegenplatte (145) und dem Anschlagsabschnitt (225) in axialer Richtung der erste und der zweite Reibpartner (55, 60) angeordnet ist, wobei die Gegenplatte (145) ausgebildet, die Anpresskraft (F) abzustützen.

9. Kupplungseinrichtung (10, 300, 400, 500, 600) nach Anspruch 6 bis 8, **dadurch gekennzeichnet, dass** eine Nabe (100) vorgesehen sind, wobei der Lamellenträger (40, 70) drehmomentschlüssig mit dem zweiten Reibpartner (60) und die Nabe (100) drehmomentschlüssig mit der Ausgangsseite (20) verbunden ist, wobei das Federmittel (85) zur Drehmomentübertragung zwischen dem Lamellenträger (40, 70) und der Nabe (100) mit dem Lamellenträger (40, 70) und der Nabe (100) verbunden ist.

10. Kupplungseinrichtung (10, 300, 400, 500, 600) nach einem der Ansprüche 6 bis 9, **dadurch gekennzeichnet, dass** das Federmittel (85) radial zumindest teilweise zwischen der Nabe (100) und dem Lamellenträger (40, 70) angeordnet ist.

11. Kupplungseinrichtung (10, 300, 400, 500, 600) nach einem der Ansprüche 6 bis 10, **dadurch gekennzeichnet, dass** ein Betätigungselement (205) vorgesehen ist, das zur Betätigung des Federmittels (85) ausgebildet und mit dem Federmittel (85) gekoppelt ist, wobei das Betätigungselement (205) weist zumindest eine zur Drehachse (25) beabstandete Öffnung aufweist, wobei der Lamellenträger (40, 70) eine Halteeinrichtung (265) mit einer Haltezunge (270) und einem Sperrelement (285) umfasst, wobei die Haltezunge (270) die der Haltezunge (270) zugeordnete Öffnung (260) des Betätigungselements (205) durchgreift, wobei das Sperrelement (285) das Betätigungselement (205) auf einer zum Lamellenträger (40, 70) abgewandten Seite hintergreift.

12. Kupplungseinrichtung (10, 300, 400, 500, 600) nach einem der Ansprüche 8 bis 11, **dadurch gekennzeichnet, dass** ein Abstützelement (405) vorgesehen ist, wobei das Abstützelement (405) drehmomentschlüssig mit der Nabe (100) verbunden, wobei das Abstützelement (405) eine Anschlagsfläche (420) umfasst, wobei der Lamellenträger (40, 70) einer der Anschlagsfläche (420) des Abstützelements (405) zugeordnete Anlauffläche (425) aufweist, wobei bei dem Reibschluss zwischen dem ersten Reibpartner (55) und dem zweiten Reibpartner (60) das Federmittel (85) verspannt wird und nach Erreichen einer vordefinierten Verspannung des Federmittels (85) die Anlauffläche (425) an der Anschlagsfläche (420) anschlägt.

## Claims

1. Clutch device (10, 300, 400, 500, 600) comprising:
- an input side (15) and an output side (20) which are arranged such that they can be rotated about a rotational axis (25), and
- at least one first friction partner (55) and at least one second friction partner (60),
- the first friction partner (55) being connected to the input side (15) in a torque-transmitting manner,
- the second friction partner (60) being connected to the output side (20) in a torque-transmitting manner,
- it being possible for the first and the second friction partner (55, 60) to be brought into frictional engagement by way of a pressing force (F), in order to transmit a torque between the input side (15) and the output side (20),
- at least one spring means (85) being provided,
- **characterized in that** the spring means (85) is configured as a leaf spring, in order to boost the pressing force (F).

2. Clutch device (10, 300, 400, 500, 600) according to Claim 1, **characterized in that** the spring means (85) is connected to the output side (20) and the second friction partner (60), the spring means (85) being braced between the second friction partner (60) and the output side (20) in the case of a torque transmission between the input side (15) and the output side (20), the spring means (85) being configured to use the bracing action to boost the pressing force (F) for pressing the two friction partners (55, 60) against one another.

3. Clutch device (10, 300, 400, 500, 600) according to Claim 1 or 2, **characterized in that** the spring means (85) has a first spring leaf (156) and at least one second spring leaf (160, 165), the first leaf and the second leaf being at least partially in touching contact.

4. Clutch device (10, 300, 400, 500, 600) according to Claim 3, **characterized in that** the first spring leaf (156) of the spring means (85) has a bulge (195) and the second spring leaf (160, 165) of the spring means (85) has an indentation (190), the bulge (195) and the indentation (190) following the longitudinal extent of the leaf spring, the bulge (195) of the first leaf engaging into the indentation (190) of the second leaf.

5. Clutch device (10, 300, 400, 500, 600) according to one of Claims 1 to 4, **characterized in that** the spring means (85) is guided at least partially helically around the rotational axis (25).

6. Clutch device (10, 300, 400, 500, 600) according to one of Claims 1 to 5, **characterized in that** a multiple disc carrier (40, 70) is provided, the multiple disc carrier (40, 70) being connected to the first or to the second friction partner (55, 60) in a torque-transmitting manner, the multiple disc carrier (40, 70) having a compression section (221) which is arranged axially adjacently with respect to the first or second friction partner (55, 60).

7. Clutch device (10, 300, 400, 500, 600) according to Claim 6, **characterized in that** the compression section (221) has at least one modulation spring (230) and a stop section (225), the modulation spring (230) having a fixed end (240) and a free end (235), the fixed end (240) being connected to the multiple disc carrier (40, 70), the free end (235) protruding axially beyond the stop section (225) in the direction of the first and/or second friction partner (55, 60).

8. Clutch device (10, 300, 400, 500, 600) according to Claim 7, **characterized in that** a counterplate (145) is provided, the counterplate (145) being arranged so as to lie axially opposite the stop section (225) of the multiple disc carrier (40, 70), the first and the second friction partner (55, 60) being arranged in the axial direction between the counterplate (145) and the stop section (225), the counterplate (145) being configured to support the pressing force (F).

9. Clutch device (10, 300, 400, 500, 600) according to Claims 6 to 8, **characterized in that** a hub (100) is provided, the multiple disc carrier (40, 70) being connected to the second friction partner (60) in a torque-transmitting manner, and the hub (100) being connected to the output side (20) in a torque-transmitting manner, the spring means (85) being connected to the multiple disc carrier (40, 70) and the hub (100) for the transmission of torque between the multiple disc carrier (40, 70) and the hub (100).

10. Clutch device (10, 300, 400, 500, 600) according to one of Claims 6 to 9, **characterized in that** the spring means (85) is arranged radially at least partially between the hub (100) and the multiple disc carrier (40, 70).

11. Clutch device (10, 300, 400, 500, 600) according to one of Claims 6 to 10, **characterized in that** an actuating element (205) is provided which is configured to actuate the spring means (85) and is coupled to the spring means (85), the actuating element (205) having at least one opening which is spaced apart from the rotational axis (25), the multiple disc carrier (40, 70) comprising a holding device (265) with a holding tongue (270) and a locking element (285), the holding tongue (270) penetrating that opening (260) of the actuating element (205) which is assigned to the holding tongue (270), the locking element (285) engaging behind the actuating element (205) on a side which faces away from the multiple disc carrier (40, 70).

12. Clutch device (10, 300, 400, 500, 600) according to one of Claims 8 to 11, **characterized in that** a supporting element (405) is provided, the supporting element (405) being connected to the hub (100) in a torque-transmitting manner, the supporting element (405) comprising a stop face (420), the multiple disc carrier (40, 70) having a thrust face (425) which is assigned to the stop face (420) of the supporting element (405), the spring means (85) being braced in the case of the frictionally locking connection between the first friction partner (55) and the second friction partner (60), and the thrust face (425) coming into contact with the stop face (420) after a predefined bracing action of the spring means (85) is reached.

## Revendications

1. Dispositif d'embrayage (10, 300, 400, 500, 600) comprenant:
- un côté d'entrée (15) et un côté de sortie (20), qui sont disposés de façon rotative autour d'un axe de rotation (25), ainsi que
- au moins un premier partenaire de friction (55) et au moins un second partenaire de friction (60),
- dans lequel le premier partenaire de friction (55) est relié en transmission de couple au côté d'entrée (15),
- dans lequel le second partenaire de friction (60) est relié en transmission de couple au côté de sortie (20),
- dans lequel le premier et le second partenaires de friction (55, 60) peuvent être amenés en engagement de friction par une force de pression (F), afin de transmettre un couple entre le côté d'entrée (15) et le côté de sortie (20),
- dans lequel il est prévu au moins un moyen de ressort (85),
**caractérisé en ce que** le moyen de ressort (85) est formé par un ressort à lame, afin de renforcer la force de pression (F).

2. Dispositif d'embrayage (10, 300, 400, 500, 600) selon la revendication 1, **caractérisé en ce que** le moyen de ressort (85) est relié au côté de sortie (20) et au second partenaire de friction (60), dans lequel lors d'une transmission de couple entre le côté d'entrée (15) et le côté de sortie (20) le moyen de ressort (85) est serré entre le second partenaire de friction (60) et le côté de sortie (20), dans lequel le moyen de ressort (85) est réalisé de façon à renforcer à partir du serrage la force de pression (F) destinée à presser les deux partenaires de friction (55, 60) l'un sur l'autre.

3. Dispositif d'embrayage (10, 300, 400, 500, 600) selon la revendication 1 ou 2, **caractérisé en ce que** le moyen de ressort (85) présente une première couche de ressort (156) et au moins une seconde couche de ressort (160, 165), dans lequel la première couche et la seconde couche sont au moins partiellement en contact direct.

4. Dispositif d'embrayage (10, 300, 400, 500, 600) selon la revendication 3, **caractérisé en ce que** la première couche de ressort (156) du moyen de ressort (85) présente un renflement (195) et la seconde couche de ressort (160, 165) du moyen de ressort (85) présente un creux (190), dans lequel le renflement (195) et le creux (190) suivent l'extension longitudinale du ressort à lame, dans lequel le renflement (195) de la première couche s'engage dans le creux (190) de la seconde couche.

5. Dispositif d'embrayage (10, 300, 400, 500, 600) selon l'une quelconque des revendications 1 à 4, **caractérisé en ce que** le moyen de ressort (85) est mené au moins partiellement sous forme hélicoïdale autour de l'axe de rotation (25).

6. Dispositif d'embrayage (10, 300, 400, 500, 600) selon l'une quelconque des revendications 1 à 5, **caractérisé en ce qu'**il est prévu un support de lamelles (40, 70), dans lequel le support de lamelles (40, 70) est relié en transmission de couple au premier ou au second partenaire de friction (55, 60), dans lequel le support de lamelles (40, 70) présente une partie de compression (221), qui est disposée axialement en position adjacente au premier ou au second partenaire de friction (55, 60).

7. Dispositif d'embrayage (10, 300, 400, 500, 600) selon la revendication 6, **caractérisé en ce que** la partie de compression (221) présente au moins un ressort de modulation (230) et une partie de butée (225), dans lequel le ressort de modulation (230) présente une extrémité fixe (240) et une extrémité libre (235), dans lequel l'extrémité fixe (240) est reliée au support de lamelles (40, 70), dans lequel l'extrémité libre (235) est saillante axialement au-dessus de la partie de butée (225) en direction du premier et/ou du second partenaire de friction (55, 60).

8. Dispositif d'embrayage (10, 300, 400, 500, 600) selon la revendication 7, **caractérisé en ce qu'**il est prévu une contre-plaque (145), dans lequel la contre-plaque (145) est disposée axialement en face de la partie de butée (225) du support de lamelles (40, 70), dans lequel le premier et le second partenaires de friction (55, 60) sont disposés entre la contre-plaque (145) et la partie de butée (225) en direction axiale, dans lequel la contre-plaque (145) est réalisée de façon à supporter la force de pression (F).

9. Dispositif d'embrayage (10, 300, 400, 500, 600) selon l'une quelconque des revendications 6 à 8, **caractérisé en ce qu'**il est prévu un moyeu (100), dans lequel le support de lamelles (40, 70) est relié en transmission de couple au second partenaire de friction (60) et le moyeu (100) est relié en transmission de couple au côté de sortie (20), dans lequel le moyen de ressort (85) est relié au support de lamelles (40, 70) et au moyeu (100) pour la transmission de couple entre le support de lamelles (40, 70) et le moyeu (100).

10. Dispositif d'embrayage (10, 300, 400, 500, 600) selon l'une quelconque des revendications 6 à 9, **caractérisé en ce que** le moyen de ressort (85) est disposé radialement au moins en partie entre le moyeu (100) et le support de lamelles (40, 70).

11. Dispositif d'embrayage (10, 300, 400, 500, 600) selon l'une quelconque des revendications 6 à 10, **caractérisé en ce qu'**il est prévu un élément d'actionnement (205), qui est configuré pour l'actionnement du moyen de ressort (85) et qui est couplé au moyen de ressort (85), dans lequel l'élément d'actionnement (205) présente au moins une ouverture espacée de l'axe de rotation (25), dans lequel le support de lamelles (40, 70) comprend un dispositif de maintien (265) avec une patte de maintien (270) et un élément d'arrêt (285), dans lequel la patte de maintien (270) traverse l'ouverture (260) de l'élément d'actionnement (205) associée à la patte de maintien (270), dans lequel l'élément d'arrêt (285) s'accroche à l'arrière de l'élément d'actionnement (205) sur un côté détourné du support de lamelles (40, 70).

12. Dispositif d'embrayage (10, 300, 400, 500, 600) selon l'une quelconque des revendications 8 à 11, **caractérisé en ce qu'**il est prévu un élément de soutien (405), dans lequel l'élément de soutien (405) est relié en transmission de couple au moyeu (100), dans lequel l'élément de soutien (405) comprend une face de butée (420), dans lequel le support de lamelles (40, 70) présente une face d'approche (425) associée à la face de butée (420) de l'élément de soutien (405), dans lequel lors de l'engagement par friction le moyen de ressort (85) est serré entre le premier partenaire de friction (55) et le second partenaire de friction (60) et la face d'approche (425) bute sur la face de butée (420) lorsqu'un serrage prédéfini du moyen de ressort (85) est atteint.
